# EUROPEAN PATENT APPLICATION

(11) **EP 4 401 006 A1**
(43) Date of publication of application: **17.07.2024**
(21) Application number: 21964384.8
(22) Date of filing: 18.11.2021
(51) Int. Cl.: G06N 3/00

(54) **DATA PROCESSING APPARATUS AND METHOD**

(71) Applicant: Huawei Technologies Co., Ltd., Shenzhen, Guangdong 518129 (CN)
(72) Inventor: ZHANG, Linjian, Shenzhen, Guangdong 518129 (CN); FAN, Tuanbao, Shenzhen, Guangdong 518129 (CN); LEE, ChungKuei, Shenzhen, Guangdong 518129 (CN); ZHENG, Ming, Shenzhen, Guangdong 518129 (CN)
(74) Representative: Pfenning, Meinig & Partner mbB
(86) International application number: PCT/CN2021/131571
(87) International publication number: WO 2023/087227

(57) **Abstract**

The present disclosure provides a data processing apparatus and method. The data processing apparatus includes: a scheduler, configured to schedule at least one processing task to a first processing unit and/or a second processing unit; the first processing unit, configured to process at least a first part of the at least one processing task by using a first convolution parameter configured before the at least the first part is processed; the second processing unit, configured to process at least a second part of the at least one processing task by using a second convolution parameter, where the second convolution parameter is read from a storage unit during a process of processing the at least the second part; and the storage unit, configured to store data related to the at least one processing task. In this manner, the first convolution parameter used by the first processing unit is configured before the task is processed. In this way, the first convolution parameter does not need to be read from the storage unit again or updated during a task processing process. This can reduce data transmission, reduce power consumption overheads, and improve processing energy efficiency.

## Description

### TECHNICAL FIELD

Embodiments of the present disclosure mainly relate to the chip field, and more specifically, to a data processing apparatus and method.

### BACKGROUND

A processor may perform various data computations or information processing. In a Von Neumann (Von Neumann) computing architecture, storage and computing are separated. In other words, storage and computing belong to different chips or modules. A central processing unit (Central Processing Unit, CPU), a graphics processing unit (Graphics Processing Unit, GPU), a neural-network processing unit (Neural-network Processing Unit, NPU), and the like are processors developed based on the Von Neumann architecture. The NPU may be used for an artificial neural network (Artificial Neural Network, ANN), machine learning (Machine Learning, ML), and the like, and used as a dedicated hardware accelerator or computing system.

However, because storage and computing belong to different modules, when the processor processes data, data being processed needs to be transmitted back and forth between a computing module and a storage module. This causes a large quantity of power consumption and time overheads. Consequently, processing efficiency of the processor is affected.

### SUMMARY

Embodiments of the present disclosure provide a data processing apparatus, including a first processing unit. A first convolution parameter used by the first processing unit is configured before a task is processed and remains unchanged during a task processing process. This can reduce data transmission and improve processing efficiency.

According to a first aspect, a data processing apparatus is provided. The apparatus includes: a scheduler, configured to schedule at least one processing task to at least one of a first processing unit and a second processing unit; the first processing unit, configured to process at least a first part of the at least one processing task by using a first convolution parameter, where the first convolution parameter is configured in the first processing unit before the at least the first part is processed; the second processing unit, configured to process at least a second part of the at least one processing task by using a second convolution parameter, where the second convolution parameter is read from a storage unit during a process of processing the at least the second part; and the storage unit, configured to store data related to the at least one processing task, where the data includes the second convolution parameter.

In this way, the apparatus includes the first processing unit, and the first convolution parameter used by the first processing unit is configured before the task is processed. In this way, the first processing unit does not need to read the used first convolution parameter from the storage unit again during a task processing process. This can reduce data transmission, reduce power consumption overheads, and improve processing energy efficiency. In addition, the apparatus further includes the second processing unit, and the processing unit can read the used second convolution parameter during a task processing process. In this way, tasks that can be processed by the apparatus are not limited by the first processing unit, and the apparatus can be configured to process various tasks. This can improve universality of the apparatus.

In some embodiments of the first aspect, the at least one processing task includes a first processing task. In addition, the scheduler is configured to: split the first processing task into the first part and the second part, where the first part is a first subtask, and the second part is a second subtask; schedule the first subtask to the first processing unit; and schedule the second subtask to the second processing unit.

In this way, the scheduler can schedule one part of the processing task to the first processing unit, and schedule the other part of the processing task to the second processing unit, so that the first processing unit and the second processing unit can cooperate with each other to implement the processing task. High processing energy efficiency of the first processing unit is effectively utilized. Additionally, complete execution of the processing task is ensured.

In some embodiments of the first aspect, the scheduler is configured to split the first processing task into the first part and the second part based on at least one of the following factors: a size of a convolution kernel used by the first processing unit, a quantity of channels of data processed by the first processing unit, a format of data processed by the first processing unit, a type of an activation function processed by the first processing unit, a type of a pooling function processed by the first processing unit, or the like.

In this way, the scheduler can schedule, to the first processing unit based on a processing capability of the first processing unit, the first subtask that can be implemented by the first processing unit. This can effectively utilize high energy efficiency of the first processing unit and ensure efficiency in executing the processing task.

In some embodiments of the first aspect, the at least one processing task includes a first processing task and a second processing task, the first processing task is the first part, and the second processing task is the second part. In addition, the scheduler is configured to: schedule the first processing task to the first processing unit and schedule the second processing task to the second processing unit.

In this way, the scheduler can schedule different processing tasks to the first processing unit and the second processing unit respectively, so that different processing tasks can be performed in parallel, improving processing efficiency.

In some embodiments of the first aspect, the apparatus further includes a data path, configured to perform data transmission between the first processing unit and the second processing unit.

In this way, there may be a data path used for data transmission between the first processing unit and the second processing unit. This can ensure cooperation between the first processing unit and the second processing unit.

In some embodiments of the first aspect, the first processing unit includes at least one computing in memory (Computing in Memory, CIM) subunit. In some examples, the first processing unit may include a plurality of CIM subunits.

In some embodiments of the first aspect, the second processing unit includes at least one of a matrix unit and a vector unit, the matrix unit is configured to perform a matrix computation, and the vector unit is configured to perform a vector computation.

In this way, the matrix unit and the vector unit may cooperate with each other to implement a task processed by the second processing unit. This can ensure that the task is correctly processed.

In some embodiments of the first aspect, the first convolution parameter is for a first neural network model applicable to the first processing unit, and the second convolution parameter is for a second neural network model applicable to the second processing unit.

In some embodiments of the first aspect, the first convolution parameter remains unchanged in the first processing unit during a process in which the first neural network model is applied to the first processing unit.

In this way, the first convolution parameter can be prevented from being repeatedly read from the storage unit. This greatly reduces power consumption overheads caused by data transmission and improves processing energy efficiency.

In some embodiments of the first aspect, during a process in which the second neural network model is applied to the second processing unit, the second convolution parameter is read from the storage unit to the second processing unit, to update a historical convolution parameter in the second processing unit.

In some embodiments of the first aspect, the apparatus is a chip, the scheduler, the first processing unit, the second processing unit, and the storage unit are integrated into the chip, and the storage unit includes a buffer (Buffer) or a buffer (Cache).

According to a second aspect, a data processing method is provided. The method includes: A scheduler schedules at least one processing task to at least one of a first processing unit and a second processing unit. The first processing unit processes at least a first part of the at least one processing task by using a first convolution parameter, where the first convolution parameter is configured in the first processing unit before the at least the first part is processed. The second processing unit processes at least a second part of the at least one processing task by using a second convolution parameter, where the second convolution parameter is read from a storage unit during a process of processing the at least the second part, the storage unit is configured to store data related to the at least one processing task, and the data includes the second convolution parameter. The data processing method may be performed by the data processing apparatus in the first aspect or any embodiment of the first aspect.

According to a third aspect, a computer-readable storage medium is provided. The computer-readable storage medium stores computer-executable instructions. When the computer-executable instructions are executed by a processor, the method according to the second aspect is implemented.

According to a fourth aspect, a computer program or a computer program product is provided. The computer program or the computer program product is tangibly stored in a computer-readable medium and includes computer-executable instructions. When the computer-executable instructions are executed, the method according to the second aspect is implemented.

According to a fifth aspect, a chip is provided. Units included in the data processing apparatus in the first aspect or any embodiment of the first aspect may be integrated into the chip.

It should be understood that the content described in the Summary is not intended to limit key or important features of embodiments of the present disclosure or limit the scope of the present disclosure. Other features of the present disclosure are easily understood through the following descriptions.

### BRIEF DESCRIPTION OF DRAWINGS

With reference to the accompanying drawings and the following detailed descriptions, the foregoing and other features, advantages, and aspects of embodiments of the present disclosure become more apparent. Same or similar reference numerals in the accompanying drawings indicate same or similar elements.
FIG. 1 is a schematic block diagram of a data processing apparatus according to some embodiments of the present disclosure;
FIG. 2 is a schematic diagram of an example architecture of a data processing apparatus according to some embodiments of the present disclosure;
FIG. 3 is a schematic flowchart of a data processing process according to some embodiments of the present disclosure;
FIG. 4 is a schematic flowchart of a processing process of an ANN model of VGG-16 according to some embodiments of the present disclosure;
FIG. 5 shows a schematic flow direction of a feature map in the process shown in FIG. 4 according to some embodiments of the present disclosure;
FIG. 6 is a schematic flowchart of a processing process of an ANN model with a mixed precision according to some embodiments of the present disclosure;
FIG. 7 shows a schematic flow direction of a feature map in the process shown in FIG. 6 according to some embodiments of the present disclosure;
FIG. 8 is a schematic flowchart of a processing process of an ANN model obtained through low-bit quantization according to some embodiments of the present disclosure;
FIG. 9 shows a schematic flow direction of a feature map in the process shown in FIG. 8 according to some embodiments of the present disclosure;
FIG. 10 is a schematic flowchart of a processing process of a residual block according to some embodiments of the present disclosure;
FIG. 11 shows a schematic flow direction of a feature map in the process shown in FIG. 10 according to some embodiments of the present disclosure;
FIG. 12 is a schematic flowchart of a processing process of a first processing task and a second processing task according to some embodiments of the present disclosure;
FIG. 13 shows a schematic flow direction of a feature map in the process shown in FIG. 12 according to some embodiments of the present disclosure; and
FIG. 14 is a schematic block diagram of an example device that can be configured to implement embodiments of the present disclosure.

### DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure may be implemented in various forms, and shall not be construed as being limited to embodiments described herein. On the contrary, these embodiments are provided for a more thorough and complete understanding of the present disclosure. It should be understood that the accompanying drawings and embodiments of the present disclosure are merely used as examples and are not intended to limit the protection scope of the present disclosure.

In the descriptions of embodiments of the present disclosure, the term "include" and similar terms thereof should be understood as non-exclusive inclusions, that is, "include but are not limited to". The term "based on" should be understood as "at least partially based on". The term "an embodiment" or "the embodiment" should be understood as "at least one embodiment". The terms "first", "second", and the like may indicate different objects or a same object. The term "and/or" indicates at least one of two items associated with the term. For example, "A and/or B" indicates A, B, or A and B. The following may further include other explicit and implied definitions.

Currently, with development of artificial intelligence, there are processing scenarios related to a large-scale quantity of data, such as deep learning, an ANN, and ML, in various industries. Various dedicated accelerators are designed for application scenarios such as an ANN and ML. For example, neural-network processing units (Neural-network Processing Units, NPUs) are main dedicated accelerators for processing ANNs and ML. Generally, an NPU architecture includes a task manager, a matrix unit, and a vector unit. The task manager mainly schedules a computing task and controls a program process. The matrix unit mainly performs a matrix-related computation. The vector unit mainly performs a vector-related computation.

When an NPU processes a task related to the ANN or the like, the NPU needs to read, from a cache of the NPU, an external memory, or the like, processed data and various parameters used during a processing process. Because a large quantity of data is migrated during a task processing process, high power consumption overheads are caused, and consequently, efficiency is not high.

In view of this, an embodiment of the present disclosure provides a data processing apparatus, to reduce data transmission and improve processing efficiency.

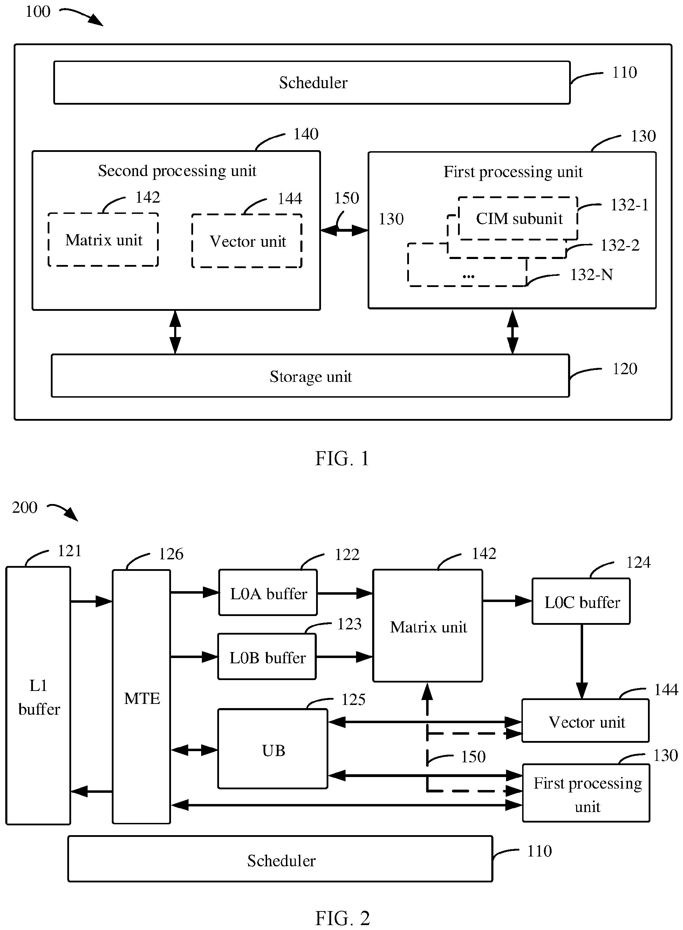

FIG. 1 is a schematic block diagram of a data processing apparatus 100 according to some embodiments of the present disclosure. As shown in FIG. 1, the data processing apparatus 100 includes a scheduler 110, a storage unit 120, a first processing unit 130, and a second processing unit 140.

The scheduler 110 may be configured to schedule at least one processing task to at least one of the first processing unit 130 and the second processing unit 140. The first processing unit 130 may be configured to process at least a first part of the at least one processing task by using a first convolution parameter. The first convolution parameter is configured in the first processing unit 130 before the at least the first part is processed. The second processing unit 140 may be configured to process at least a second part of the at least one processing task by using a second convolution parameter. The second convolution parameter is read from the storage unit 120 during a process of processing the at least the second part. The storage unit 120 may be configured to store data related to the at least one processing task. The data includes the second convolution parameter.

The data processing apparatus 100 may be configured to implement various AI-related computations. It may be understood that the data processing apparatus 100 may also be referred to as an AI core, a processor, an AI dedicated processor, a fused accelerator, or another name. This is not limited in the present disclosure.

It should be noted that module or unit division shown in FIG. 1 is an example, and is merely logical function division. In actual implementation, there may be another division manner. In addition, functional units in the disclosed embodiments may be integrated into one unit, or may exist alone physically, or two or more units may be integrated into one unit. For example, one part of the storage unit 120 may be implemented as a separate physical unit, and the other part of the storage unit 120 together with the second processing unit 140 may be implemented as a separate physical unit. In addition, it may be understood that the integrated unit may be implemented in a form of hardware, or may be implemented in a form of software functional unit.

In some scenarios, the data processing apparatus 100 may be implemented as a chip. Correspondingly, the scheduler 110, the storage unit 120, the first processing unit 130, and the second processing unit 140 are integrated into the chip. In some other scenarios, the data processing apparatus 100 may be implemented as a chip system including a plurality of chips. Two chips are used as an example. The scheduler 110, the storage unit 120, the first processing unit 130, and one part of the second processing unit 140 are integrated into one chip, and the scheduler 110, the storage unit 120, the first processing unit 130, and the other part of the second processing unit 140 are integrated into the other chip.

The scheduler 110 may be configured to schedule a processing task, to control a related procedure of the processing task. It may be understood that the scheduler 110 may also be referred to as a scheduling unit, a task manager (task manager), a controller, or the like. This is not limited in the present disclosure.

In some examples, the first processing unit 130 may include at least one CIM subunit. As shown in FIG. 1, the first processing unit 130 includes a CIM subunit 132-1, a CIM subunit 132-2, ..., a CIM subunit 132-N, where N is a positive integer. It should be noted that although N CIM subunits are shown in FIG. 1, this is not limited in the present disclosure. For example, the first processing unit 130 may alternatively include one CIM subunit, that is, N=1.

The CIM technology is essentially a non-Von Neumann architecture. The CIM technology changes design functions of a logical unit and a storage unit and organically combines storage and computing. In this way, problems of "storage wall" and "power consumption wall" in a Von Neumann architecture are eliminated, and computing energy efficiency is improved. For example, CIM-related technologies may include static random access memory (Static Random Access Memory, SRAM) computing in memory, dynamic random access memory (Dynamic Random Access Memory, DRAM) computing in memory, multi-valued computing in memory, binary-valued computing in memory, and the like.

In this embodiment of the present disclosure, the first convolution parameter used by the first processing unit 130 is preset in the first processing unit 130 before a specific task is processed. Optionally, the first convolution parameter remains unchanged during a process of processing the specific task by the first processing unit 130. In this way, a convolution parameter does not need to be migrated from the storage unit 120 or an external memory during a processing process. This reduces power consumption overheads and improves processing energy efficiency.

In some examples, the second processing unit 140 may include a matrix unit and/or a vector unit. As shown in FIG. 1, the second processing unit 140 includes a matrix unit 142 and a vector unit 144. It should be noted that although both the matrix unit 142 and the vector unit 144 are shown in FIG. 1, this is not limited in the present disclosure. For example, the second processing unit 140 may include the matrix unit 142 but not include the vector unit 144, or the second processing unit 142 may include the vector unit 144 but not include the matrix unit 142.

Optionally, there may be a data path 150 between the first processing unit 130 and the second processing unit 140. The data path 150 may be configured to perform data transmission between the first processing unit 130 and the second processing unit 140. Specifically, the first processing unit 130 may have a first interface, the second processing unit 140 may have a second interface, and a connection between the first interface and the second interface is the data path.

In some examples, the storage unit 120 may be implemented as a buffer (Buffer) or a cache (Cache). An example in which the storage unit 120 includes a buffer is used. For data migration, a series of on-chip buffers may be designed. For example, the storage unit 120 may include an L1 buffer, an L0A buffer, an L0B buffer, an L0C buffer, a unified buffer (Unified Buffer, UB), and the like. The L1 buffer is an input buffer, and the UB is an output buffer.

FIG. 2 is a schematic diagram of an example architecture 200 of a data processing apparatus 100 according to some embodiments of the present disclosure. As shown in FIG. 2, the architecture 200 includes an L1 buffer 121, an L0A buffer 122, an L0B buffer 123, an L0C buffer 124, a UB 125, a memory transfer engine (Memory Transfer Engine, MTE) 126, a matrix unit 142, a vector unit 144, a first processing unit 130, and a scheduler 110.

For example, a possible data flow direction is further shown in FIG. 2 by using arrows. Optionally, a data path 150 is shown in FIG. 2 by using dashed arrows. It may be understood that the data flow direction and the like in FIG. 2 are merely examples, and shall not be construed as a limitation on embodiments of the present disclosure.

The scheduler 110 may be configured to uniformly schedule a storage resource and computing units such as the first processing unit 130, the matrix unit 142, and the vector unit 144. This reduces scheduling overheads and simplifies a programming manner.

The L1 buffer 121 is a data transfer area, and may be configured to temporarily store some data that needs to be repeatedly used in the data processing apparatus 100, to reduce a quantity of times of read/write through a bus. The MTE 126 may be configured to be responsible for read/write management of internal data of the data processing apparatus 100 between different buffers and responsible for some format conversion operations, for example, padding (padding), transpose (transpose), conversion from a 3D image to a 2D matrix (Img2Col), and unzipping (unzip). The MTE 126 may provide inputs to the matrix unit 142 and the first processing unit 130.

The L0A buffer 122 and the L0B buffer 123 are configured to store an input of a matrix computation performed by the matrix unit 142. For example, the L0A buffer 122 is configured to store a left matrix of matrix multiplication, and the L0B buffer 123 is configured to store a right matrix of matrix multiplication.

The L0C buffer 124 is configured to store a result and an intermediate result of the matrix computation performed by the matrix unit 130.

The UB 125 is configured to store a source operand and a destination operand of a computation performed by the vector unit 140. The UB 125 may be further configured to store an input and an output of matrix multiplication performed by the first processing unit 130.

In this way, the first processing unit 130 may be directly connected to an input buffer (for example, connected to the L1 buffer 121 through the MTE 126) and an output buffer (the UB 125) of the data processing apparatus 100. The first processing unit 130 may share a storage resource in the data processing apparatus 100 with the matrix unit 142 and the vector unit 144. This implements tight coupling between units in the data processing apparatus 100.

In this embodiment of the present disclosure, the data processing apparatus 100 may implement various processing tasks related to a neural network. Specifically, the data processing apparatus 100 may obtain data from an external memory (for example, a shared memory of a system-on-a-chip (System on Chip, SoC), such as a double rate data (Double Data Rate, DDR) memory or a system cache (system cache)) of the data processing apparatus 100, and implement a corresponding processing task based on the obtained data.

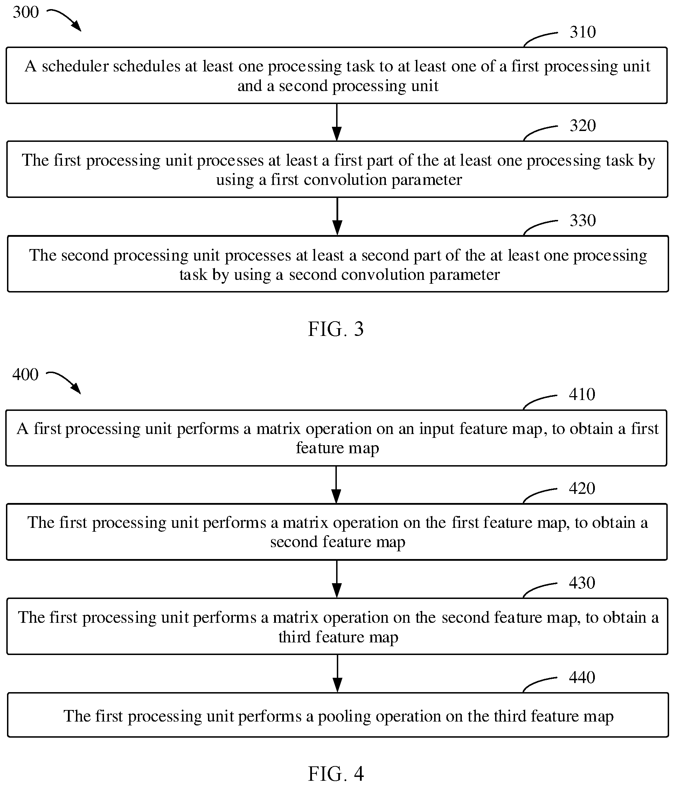

FIG. 3 is a schematic flowchart of a data processing process 300 according to some embodiments of the present disclosure. The process 300 may be performed by the foregoing data processing apparatus 100.

In block 310, a scheduler 110 schedules at least one processing task to at least one of a first processing unit and a second processing unit.

In block 320, the first processing unit 130 processes at least a first part of the at least one processing task by using a first convolution parameter, where the first convolution parameter is configured in the first processing unit 130 before the at least the first part is processed.

In block 330, the second processing unit 140 processes at least a second part of the at least one processing task by using a second convolution parameter, where the second convolution parameter is read from a storage unit 120 during a process of processing the at least the second part, the storage unit 120 is configured to store data related to the at least one processing task, and the data includes the second convolution parameter.

It should be noted that the operations in blocks 320 and 330 are performed based on scheduling of the scheduler in block 310. In some examples, the operations in blocks 320 and 330 may be performed in parallel. In some examples, the operations in blocks 320 and 330 may be performed in order. For example, the operation in block 320 is performed, and then the operation in block 330 is performed, or the operation in block 330 is performed, and then the operation in block 320 is performed. In some examples, the operations in blocks 320 and 330 may be performed in a staggered manner (including data exchange). The following uses examples for description with reference to FIG. 4 to FIG. 13.

For a specific processing task, the scheduler 110 may determine whether the processing task is suitable for implementation by the first processing unit 130. Generally, the first processing unit 130 can support only specific ANN computing. Specifically, a data format, a quantity of channels, a size of a convolution kernel, a type of an activation function, a type of a pooling function, or the like that can be supported by the first processing unit 130 are fixed. The scheduler 110 may determine, based on these characteristics of the first processing unit 130, whether the processing task can be implemented by the first processing unit 130. If the scheduler 110 determines that the first processing unit 130 can independently implement the processing task, the scheduler 110 schedules the processing task to the first processing unit 130. If the scheduler 110 determines that the first processing unit 130 can implement a part of the processing task, the scheduler 110 schedules the part of the processing task to the first processing unit 130, and schedules the remaining part of the processing task to the second processing unit 140. If the scheduler 110 determines that the first processing unit 130 cannot implement any part of the processing task, the scheduler 110 schedules the processing task to the second processing unit 140.

For example, when performing scheduling, the scheduler 110 may consider at least one of the following factors: a size of a convolution kernel used by the first processing unit 130, a quantity of channels of data processed by the first processing unit 130, a format of data processed by the first processing unit 130, a type of an activation function processed by the first processing unit 130, a type of a pooling function processed by the first processing unit 130, or the like. For example, the data format that can be processed by the first processing unit 130 is an integer (INT), for example, includes INT-2, INT-4, or INT-8.

In this way, in this embodiment of the present disclosure, the scheduler 110 of the data processing apparatus 100 can fully consider a processing capability of the first processing unit 130, to improve task processing efficiency. In addition, the data processing apparatus 100 further includes the second processing unit 140. The second processing unit 140 has no limitation on a data format, a size of a convolution kernel, and the like, and can be configured to process various tasks, to ensure universality of the data processing apparatus 100.

In some embodiments of the present disclosure, it is assumed that the scheduler 110 determines that the processing task (briefly referred to as "task" below) may be implemented by using a first neural network model, and the first processing unit 130 may construct the first neural network model by using the first convolution parameter. In this case, the scheduler 110 may schedule the processing task to the first processing unit 130, so that the first processing unit 130 processes the task based on scheduling of the scheduler 110.

In some examples, the first processing unit 130 may include a plurality of CIM subunits. In this case, the scheduler 110 may split the task into a plurality of subtasks, and schedule each subtask to a corresponding CIM subunit. It may be understood that different subtasks may be processed by a same CIM subunit or different CIM subunits.

It is assumed that the task may be processed by using a model similar to an ANN model of a 16-layer network (VGG-16) provided by the Visual Geometry Group (Visual Geometry Group), and the first processing unit 130 may process the task by using the ANN model of VGG-16. FIG. 4 is a schematic flowchart of a processing process 400 of an ANN model of VGG-16 according to some embodiments of the present disclosure. For example, it may be assumed that the process 400 is for an input feature map from a storage unit 120, and it may be assumed that a data format of the input feature map is INT-4 or INT-8.

For example, before processing a task, a first processing unit 130 may obtain, from the storage unit 120, a first convolution parameter to be used during a process of processing the task. The first convolution parameter is for the foregoing ANN model of VGG-16, and the first convolution parameter remains unchanged during the process of processing the task. Specifically, the first convolution parameter may be obtained from an external memory (for example, a DDR) of an apparatus 100 through the storage unit 120. In addition, during the process of processing the task, there is no need to read the first convolution parameter from the storage unit 120 again or update the first convolution parameter. This reduces power consumption overheads caused by parameter reading and improves processing energy efficiency. For example, the first convolution parameter may include the following parameters in a first neural network model: a first convolution kernel, a second convolution kernel, and a third convolution kernel.

In block 410, the first processing unit 130 performs a matrix operation on an input feature map, to obtain a first feature map. Optionally, the first processing unit 130 may read the input feature map from the storage unit 120, and perform a convolution operation by using the first convolution kernel. For example, a size of the first convolution kernel may be 3×3. In addition, optionally, the first feature map may be obtained through a convolution operation and a rectified linear unit (Rectified Linear Unit, ReLU) operation.

In block 420, the first processing unit 130 performs a matrix operation on the first feature map, to obtain a second feature map. Optionally, a convolution operation may be performed by using the second convolution kernel. For example, a size of the second convolution kernel may be 3×3. In addition, optionally, the second feature map may be obtained through a convolution operation and a ReLU operation.

In block 430, the first processing unit 130 performs a matrix operation on the second feature map, to obtain a third feature map. Optionally, a convolution operation may be performed by using the third convolution kernel. For example, a size of the third convolution kernel may be 3×3. In addition, optionally, the third feature map may be obtained through a convolution operation and a ReLU operation.

In block 440, the first processing unit 130 performs a pooling operation on the third feature map. For example, the pooling may be maximum pooling, average pooling, or the like.

Optionally, a pooling result may be further stored. Specifically, the pooling result may be stored in the storage unit 120.

In this way, the scheduler 110 may determine, based on factors such as a quantity of input/output channels, a size of a convolution kernel, a data format, a type of an activation function, or a type of a pooling function, that the task is processed by the first processing unit 130. In this way, high energy efficiency of the first processing unit 130 can be effectively utilized, thereby reducing power consumption overheads.

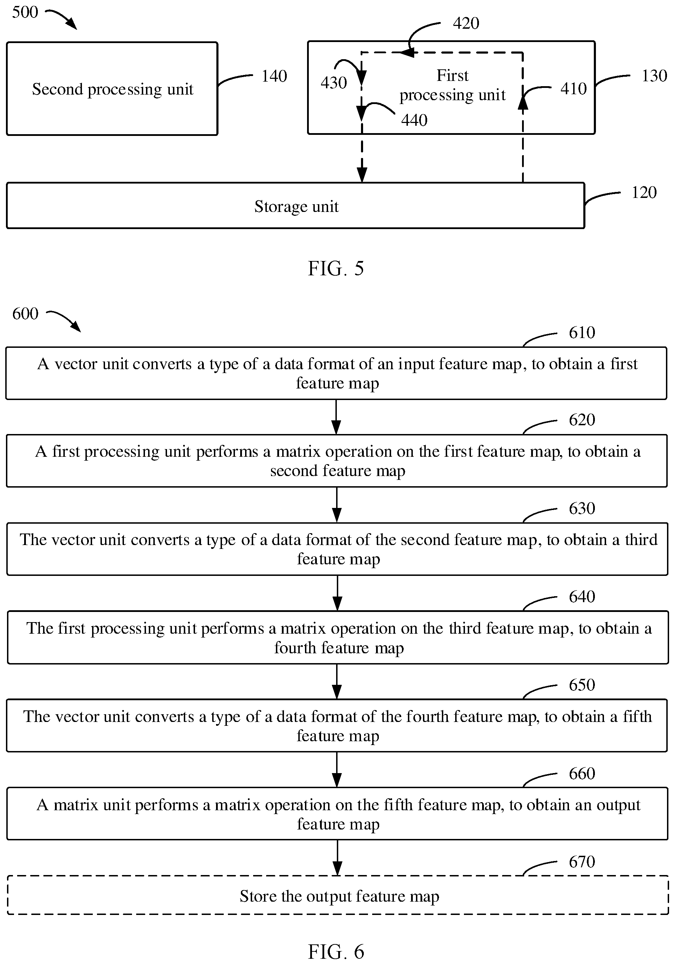

During the process 400, steps 410 to 440 are performed by the first processing unit 130. In some examples, steps 410 to 440 may be performed by different CIM subunits. For example, steps 410 to 440 may be performed by CIM subunits 132-1 to 132-4 in FIG. 1, respectively. This series connection manner without skip connections is simple in structure, easy to optimize, and has high universality. FIG. 5 shows a schematic flow direction 500 of a feature map in the process 400 shown in FIG. 4. Specifically, in FIG. 5, steps 410 to 440 of processing a feature map are shown by using dashed arrows.

In the process 400 shown in FIG. 4, the first processing unit 130 independently processes the task by using a model similar to the ANN model of VGG-16. However, it should be noted that the process 400 shown in FIG. 4 is merely an example. In an actual scenario, a quantity of blocks connected in series may be more or fewer. In addition, it may be understood that the process 400 may be used as a part of the processing task of the ANN model. This is not limited in the present disclosure.

In some embodiments of the present disclosure, it is assumed that the scheduler 110 determines that the first processing unit 130 cannot independently implement the processing task. The scheduler 110 may split the processing task into a first subtask and a second subtask, schedule the first subtask to the first processing unit 130, and schedule the second subtask to the second processing unit 140. Specifically, the scheduler 110 may determine, based on at least one of the following factors, the first subtask that can be processed by the first processing unit 130: a size of a convolution kernel used by the first processing unit 130, a quantity of channels of data processed by the first processing unit 130, a format of data processed by the first processing unit 130, a type of an activation function processed by the first processing unit 130, a type of a pooling function processed by the first processing unit 130, or the like. Optionally, due to a factor such as a size of a convolution kernel, a quantity of channels of data, a data format, a type of an activation function, or a type of a pooling function, the first processing unit 130 possibly cannot process the second subtask.

Optionally, the first subtask may include a plurality of matrix operations, such as convolution operations. Correspondingly, the first subtask may be processed by one or more CIM subunits.

For example, before processing the first subtask, the first processing unit 130 may obtain, from the storage unit 120, the first convolution parameter to be used during a process of processing the first subtask, and the first convolution parameter remains unchanged during the process of processing the first subtask. Specifically, the first convolution parameter may be obtained from an external memory (for example, a DDR) of the apparatus 100 through the storage unit 120. In addition, during the process of processing the first subtask, there is no need to read the first convolution parameter from the storage unit 120 again or update the first convolution parameter. This reduces power consumption overheads caused by parameter reading and improves processing energy efficiency.

For example, during a process of processing the second subtask, the second processing unit 140 reads the second convolution parameter from the storage unit 120, to update the historical second convolution parameter that has been used for processing the second subtask.

It is assumed that the task may be processed by an ANN model obtained through mixed-precision quantization, and the ANN model obtained through mixed-precision quantization can ensure a computing precision of the model and reduce a computing quantity of the entire ANN. A weight parameter, and a data format, a bit width, and the like occupied by input data of each layer in the ANN model can be appropriately allocated through mixed-precision quantization, so that a computing speed of the model is improved as much as possible while the computing precision of the ANN model is ensured. FIG. 6 is a schematic flowchart of a processing process 600 of an ANN model with a mixed precision according to some embodiments of the present disclosure. In an example, it may be assumed that the process 600 is for an input feature map from a storage unit 120. In an example, it may be assumed that a data format of the input feature map is FP-16, and it may be assumed that the process 600 is related to processing of three different data precisions. Data formats thereof are INT-4, INT-8, and FP-16 respectively.

In block 610, a vector unit 144 converts a type of the data format of the input feature map, to obtain a first feature map. In an example, it is assumed that the first feature map is a feature map whose data format is INT-8. Specifically, the vector unit 144 may convert the feature map type of the input feature map through a quantization (quantize) operation.

In block 620, a first processing unit 130 performs a matrix operation on the first feature map, to obtain a second feature map. Specifically, the first processing unit 130 may perform, by using a corresponding convolution kernel operator of INT-8, a matrix multiplication operation on the first feature map whose data format is INT-8, to obtain the second feature map whose data format is INT-8.

In block 630, the vector unit 140 converts a type of the data format of the second feature map, to obtain a third feature map. In an example, it is assumed that the third feature map is a feature map whose data format is INT-4. Specifically, the vector unit 144 may convert the feature map type of the second feature map through a requantization (requantize) operation.

In block 640, the first processing unit 130 performs a matrix operation on the third feature map, to obtain a fourth feature map. Specifically, the first processing unit 130 may perform, by using a corresponding convolution kernel operator of INT-4, a matrix multiplication operation on the third feature map whose data format is INT-4, to obtain the fourth feature map whose data format is INT-4.

In block 650, the vector unit 144 converts a type of the data format of the fourth feature map, to obtain a fifth feature map. In an example, it is assumed that the fifth feature map is a feature map whose data format is FP-16. Specifically, the vector unit 144 may convert the feature map type of the fourth feature map through a dequantization (dequantize) operation.

In block 660, a matrix unit 142 performs a matrix operation on the fifth feature map, to obtain an output feature map. In an example, the output feature map may be a feature map whose data format is FP-16. It should be noted that a convolution kernel used by the matrix unit 142 is not fixed during a process of performing a matrix operation. Specifically, the matrix unit 142 may continuously update the used second convolution parameter through a plurality of times of data round-trips of the second convolution parameter between the matrix unit 142 and the storage unit 120.

Optionally, in block 670, the output feature map may be stored. Specifically, the feature map may be stored in the storage unit 120.

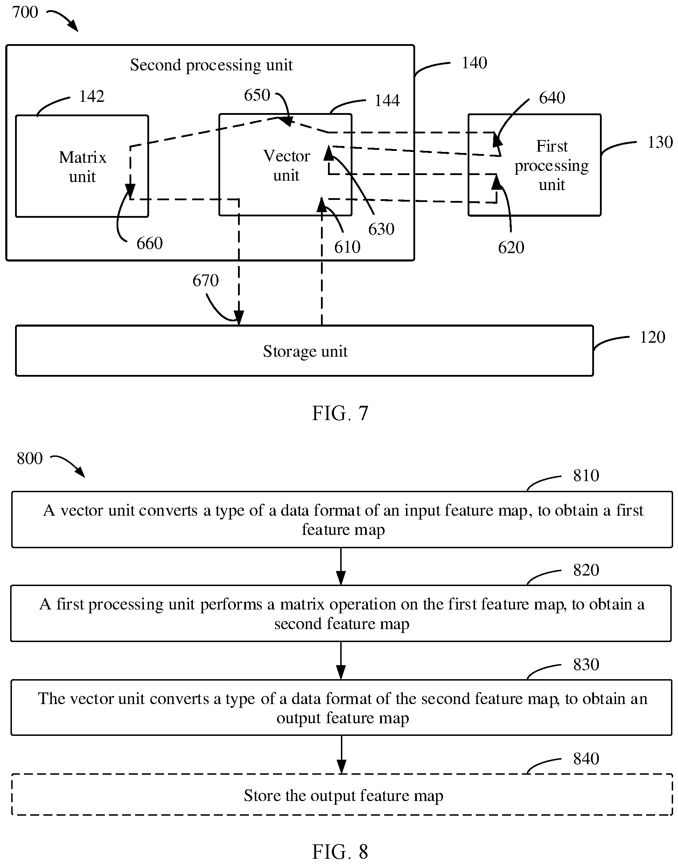

During the process 600, a first subtask processed by the first processing unit 130 is related to blocks 620 and 640, and a second subtask processed by a second processing unit 140 (the matrix unit 142 and vector unit 144) is related to blocks 610, 630, 650, and 660. In this way, the first processing unit 130 and the second processing unit 140 may cooperate with each other to implement the processing task. FIG. 7 shows a schematic flow direction 700 of a feature map in the process 600 shown in FIG. 6. Specifically, in FIG. 7, steps 610 to 670 of processing a feature map are shown by using dashed arrows. It should be noted that, in the process 600, the convolution parameter used by the second processing unit 140 is not fixed, and the updated convolution parameter used by the second processing unit 140 is obtained from the storage unit 120 during a task processing process. However, it may be understood that a process shown by dashed arrows in FIG. 7 is not related to a flow direction of the updated convolution parameter used by the second processing unit 140.

In the process 600 shown in FIG. 6, the first processing unit 130 and the second processing unit 140 cooperate with each other to implement a processing task of the ANN model obtained through mixed-precision quantization. However, it should be noted that the process 600 shown in FIG. 6 is merely an example. An actual scenario may be related to more or fewer data precisions, and more or fewer layers may be processed. In addition, it may be understood that the process 600 may be used as a part of the processing task of the ANN model.

Because the second processing unit 140 needs to read the updated second convolution parameter from the storage unit 120 during a task processing process, energy consumption of the second processing unit 140 is high during task processing. Therefore, in this embodiment of the present disclosure, when performing task scheduling, the scheduler 110 may schedule the task to the first processing unit 130 whenever possible.

In some embodiments of the present disclosure, it is assumed that the task may be processed by an ANN model obtained through low-bit quantization. A convolution procedure of low-bit quantization may use a quantization-dequantization (quantize-dequantize) method. Specifically, a data format of a feature map may be adjusted through quantization based on a size of a convolution kernel, to meet a processing requirement of the first processing unit 130. After a convolution operation is completed, the data format of the feature map may be restored through dequantization.

FIG. 8 is a schematic flowchart of a processing process 800 of an ANN model obtained through low-bit quantization according to some embodiments of the present disclosure. In an example, it may be assumed that the process 800 is for an input feature map from a storage unit 120. In an example, it may be assumed that a data format of the input feature map is FP-16 or FP-32.

In block 810, a vector unit 144 converts a type of the data format of the input feature map, to obtain a first feature map. In an example, it is assumed that the first feature map is a feature map whose data format is INT-8. Specifically, the vector unit 144 may convert the feature map type of the input feature map through a quantization (quantize) operation.

In block 820, a first processing unit 130 performs a matrix operation on the first feature map, to obtain a second feature map. Specifically, the first processing unit 130 may perform, by using a corresponding convolution kernel operator of INT-8, a matrix multiplication operation on the first feature map whose data format is INT-8, to obtain the second feature map whose data format is INT-8.

In block 830, the vector unit 1440 converts a type of the second feature map, to obtain an output feature map. Specifically, the vector unit 144 may convert the feature map type of the second feature map through a dequantization (dequantize) operation, to obtain the output feature map. A data format of the output feature map is the same as the data format of the input feature map.

Optionally, in block 840, the output feature map may be stored. Specifically, the output feature map may be stored in the storage unit 120.

In this way, a value range of a feature map may be dynamically adjusted based on a convolution kernel operator, to express more abundant information of the feature map and improve an ANN processing precision.

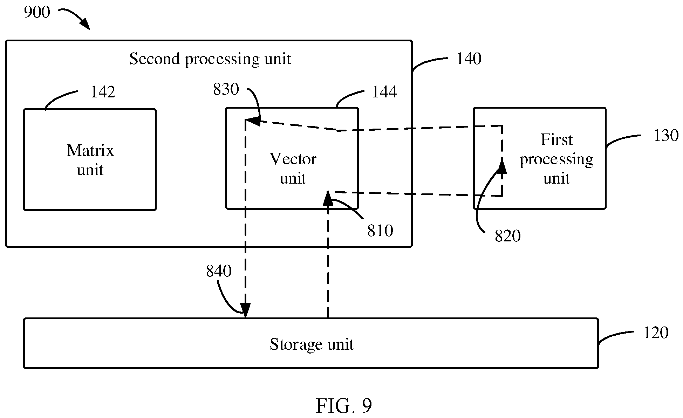

In the process 800, a first subtask processed by the first processing unit 130 is related to block 820, and a second subtask processed by a second processing unit 140 (the vector unit 144) is related to blocks 810 and 830. In this way, the first processing unit 130 and the second processing unit 140 may cooperate with each other to implement the processing task. FIG. 9 shows a schematic flow direction 900 of a feature map in the process 800 shown in FIG. 8. Specifically, in FIG. 9, steps 810 to 840 of processing a feature map are shown by using dashed arrows.

In the process 800 shown in FIG. 8, the first processing unit 130 and the second processing unit 140 cooperate with each other to implement a processing task of the ANN model obtained through low-bit quantization. It should be noted that the process 800 shown in FIG. 8 is merely an example. In an actual scenario, the process 800 may be a part of the processing task of the ANN model.

It should be noted that in the foregoing embodiments with reference to FIG. 6 to FIG. 9, the first processing unit 130 and the second processing unit 140 cooperate with each other to implement the task based on scheduling of the scheduler 110. During a process of processing the task, processed data (for example, a feature map) may be exchanged between the first processing unit 130 and the second processing unit 140. It may be understood that, in some examples, data transmission may be performed through a data path 150 between the first processing unit 130 and the second processing unit 140. In addition, it should be noted that in the foregoing embodiments with reference to FIG. 6 to FIG. 9, an example in which data formats of data (feature maps) processed by the first processing unit 130 and the second processing unit 140 are different is used for description. However, it may be understood that in an actual scenario, differences in, for example, a quantity of channels of data and a size of a convolution kernel may be further considered. For brevity, details are not described herein again.

In some embodiments of the present disclosure, it is assumed that the scheduler 110 determines that the task may be implemented by using a second neural network model, and the second neural network model includes a backbone network and a branch network. Further, the scheduler 110 may determine whether the first processing unit 130 can independently process a subtask related to the backbone network. If the scheduler 110 determines that the first processing unit 130 can process the subtask related to the backbone network, the scheduler 110 may schedule the subtask related to the backbone network (referred to as a first subtask) to the first processing unit 130, and schedule a subtask related to the branch network (referred to as a second subtask) to the second processing unit 140.

For example, before processing the first subtask, the first processing unit 130 may obtain, from the storage unit 120, the first convolution parameter to be used during a process of processing the first subtask. The first convolution parameter is for the foregoing backbone network, and the first convolution parameter remains unchanged during the process of processing the first subtask. Specifically, the first convolution parameter may be obtained from an external memory (for example, a DDR) of the apparatus 100 through the storage unit 120. In addition, during the process of processing the first subtask, the first processing unit 130 does not need to read the first convolution parameter from the storage unit 120 again or update the first convolution parameter. This reduces power consumption overheads caused by parameter reading and improves processing energy efficiency.

For example, during a process of processing the second subtask, the second processing unit 140 reads the second convolution parameter from the storage unit 120, to update the historical second convolution parameter that has been used for processing the second subtask.

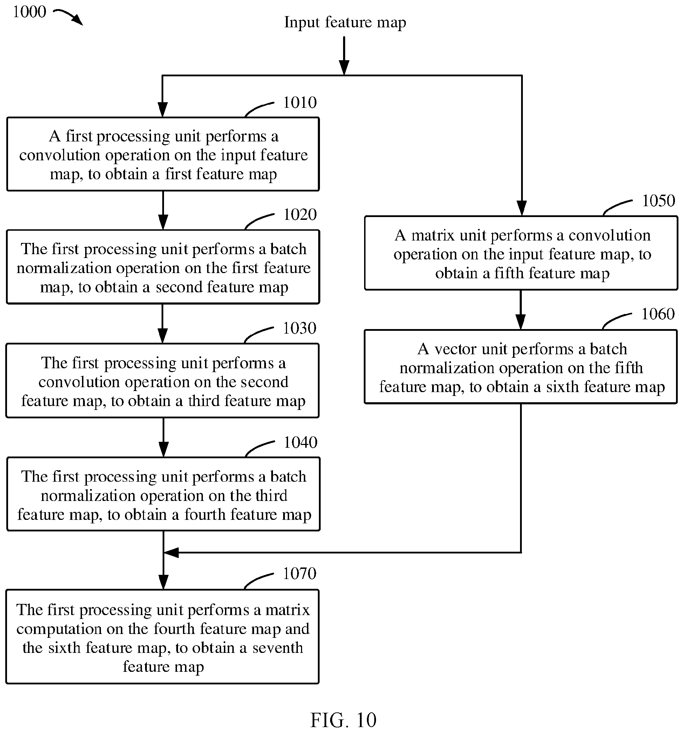

For example, the second neural network model may be a residual network (Residual Network, ResNet) model. A residual network includes one or more residual blocks. FIG. 10 is a schematic flowchart of a processing process 1000 of a residual block according to some embodiments of the present disclosure. In an example, it may be assumed that the process 1000 is for an input feature map from a storage unit 120.

In block 1010, a first processing unit 130 performs a convolution operation on the input feature map, to obtain a first feature map. Specifically, the first processing unit may perform a matrix multiplication operation on a corresponding convolution kernel operator and the input feature map, to obtain the first feature map. For example, a size of the convolution kernel operator is 3×3.

In block 1020, the first processing unit 130 performs a batch normalization (Batch Normalization) operation on the first feature map, to obtain a second feature map. Optionally, the second processing unit 130 may perform a batch normalization operation and a ReLU operation on the first feature map, to obtain the second feature map.

In block 1030, the first processing unit 130 performs a convolution operation on the second feature map, to obtain a third feature map. Specifically, the first processing unit may perform a matrix multiplication operation on a corresponding convolution kernel operator and the second feature map, to obtain the third feature map. For example, a size of the convolution kernel operator is 3×3.

In block 1040, the first processing unit 130 performs a batch normalization operation on the third feature map, to obtain a fourth feature map.

In block 1050, a matrix unit 142 performs a convolution operation on the input feature map, to obtain a fifth feature map. For example, a size of a convolution kernel operator used by the matrix unit 142 to perform the convolution operation is 1×1.

In block 1060, a vector unit 144 performs a batch normalization operation on the fifth feature map, to obtain a sixth feature map.

In block 1070, the first processing unit 130 performs a matrix operation on the fourth feature map and the sixth feature map, to obtain a seventh feature map. For example, the matrix operation may be an element-wise addition operation.

Optionally, subsequent processing, for example, a ReLU operation, may be further performed on the seventh feature map; or optionally, the seventh feature map may be further stored in the storage unit 120.

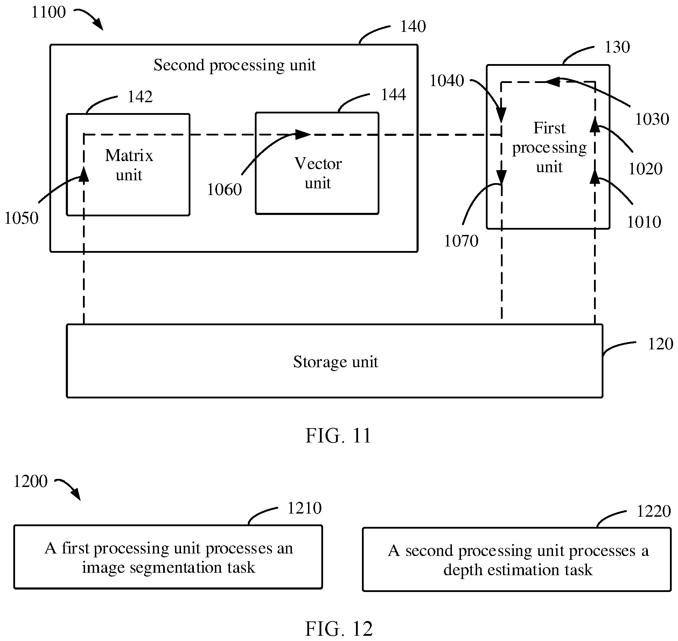

During the process 1000, a first subtask processed by the first processing unit 130 is related to blocks 1010 to 1040 and block 1070, and a second subtask processed by the second processing unit 140 (the matrix unit 142 and vector unit 144) is related to blocks 1050 and 1060. In this way, the first processing unit 130 and the second processing unit 140 may cooperate with each other to implement the processing task. In addition, it may be understood that blocks 1050 to 1060 related to the branch network and blocks 1010 to 1040 related to the backbone network may be performed in parallel. This can improve processing efficiency. FIG. 11 shows a schematic flow direction 1100 of a feature map in the process 1000 shown in FIG. 10. Specifically, in FIG. 11, steps 1010 to 1070 of processing a feature map are shown by using dashed arrows. It should be noted that, during the process 1000, the second convolution parameter used by the second processing unit 140 is not fixed, but is obtained from the storage unit 120 during a task processing process. However, it may be understood that a process shown by dashed arrows in FIG. 11 is not related to a flow direction of the updated second convolution parameter used by the second processing unit 140.

It should be noted that the process 1000 shown in FIG. 10 is merely an example. In an actual scenario, the residual network model may include a plurality of similar residual blocks. For example, the residual network model is formed by stacking the plurality of similar residual blocks. In addition, although the residual network is used as an example in the process 1000 in FIG. 10, the residual block may also be similarly applied to another network, for example, a U-Net. Details are not described in the present disclosure.

In some embodiments of the present disclosure, the scheduler 110 may schedule a plurality of processing tasks. Two processing tasks are used as an example. It is assumed that the first processing task may be implemented by using the first neural network model, the second processing task may be implemented by using the second neural network model, and the first processing unit 130 may construct the first neural network model by using the first convolution parameter. In other words, the first processing unit 130 may independently implement the first processing task. In this case, the scheduler 110 may schedule the first processing task to the first processing unit 130, and schedule the second processing task to the second processing unit 140.

For example, before processing the first processing task, the first processing unit 130 may obtain, from the storage unit 120, the first convolution parameter to be used during a process of processing the first processing task. The first convolution parameter is for the first neural network model, and the first convolution parameter remains unchanged during the process of processing the first processing task. Specifically, the first convolution parameter may be obtained from an external memory (for example, a DDR) of the apparatus 100 through the storage unit 120. In addition, during the process of processing the first processing task, the first processing unit 130 does not need to read the first convolution parameter from the storage unit 120 again or update the first convolution parameter. This reduces power consumption overheads caused by parameter reading and improves processing energy efficiency.

For example, during a process of processing the second processing task, the second processing unit 140 reads the second convolution parameter from the storage unit 120, to update the historical second convolution parameter that has been used for processing the second processing task.

For example, it is assumed that the first processing task is an image segmentation task, and the second processing task is a depth estimation task. FIG. 12 is a schematic flowchart of a processing process 1200 of a first processing task and a second processing task according to some embodiments of the present disclosure.

In block 1210, a first processing unit 130 processes an image segmentation task. It may be understood that the first processing unit 130 may implement the image segmentation task through a plurality of convolution operations, and a convolution operator used by the first processing unit 130 is fixed.

In block 1220, a second processing unit 140 processes a depth estimation task. It may be understood that the second processing unit 140 may implement the depth estimation task through a plurality of convolution operations, and during a task processing process, an updated convolution operator used by the second processing unit 140 may be obtained from the storage unit 120.

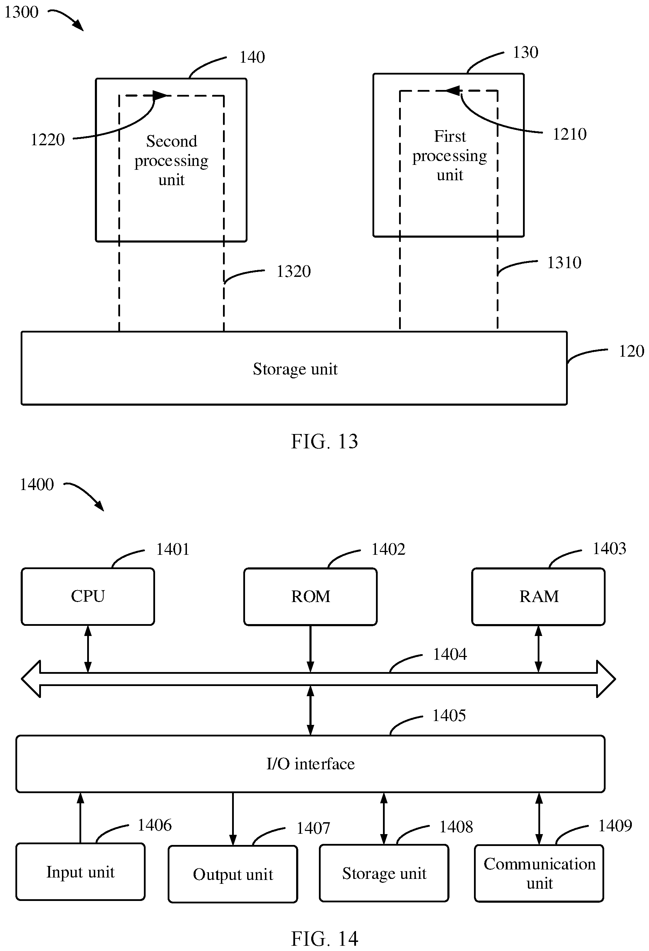

During the process 1200, the first processing unit 130 and the second processing unit 140 respectively implement the first processing task and the second processing task. FIG. 13 shows a schematic flow direction 1300 of a feature map in the process 1200 shown in FIG. 12. Specifically, a processing flow direction of the first processing unit 130 is shown by using a dashed arrow 1310, and a processing flow direction of the second processing unit 140 is shown by using a dashed arrow 1320.

In this way, when scheduling a plurality of processing tasks, a scheduler 110 may schedule the first processing task to the first processing unit 130 based on a size of a convolution kernel, a quantity of channels of data, a data format, an activation function, a pooling function, or the like of the first processing unit 130. In this way, processing efficiency of the first processing task can be ensured, and the scheduler 110 can schedule the second processing task with a higher precision requirement to the second processing unit 140, to ensure accuracy of the second processing task.

With reference to FIG. 3 to FIG. 13, the foregoing describes some examples of a data processing process performed by the data processing apparatus 100 in embodiments of the present disclosure. It should be understood that the foregoing examples are merely examples. In an actual scenario, the scheduler 110 may further consider other factors to perform scheduling, for example, timeliness of a task and a data precision of a task. In this way, the scheduler 110 can schedule an adaptive processing task (or a subtask) to the first processing unit 130 and/or the second processing unit 140, so that processing efficiency can be further improved while a task processing precision is ensured.

It should be understood that, in embodiments of the present disclosure, the terms "first", "second", "third", and the like are merely intended to indicate that a plurality of objects may be different, but are not intended to exclude that two objects are the same. The terms "first", "second", "third" and the like shall not be construed as any limitation on embodiments of the present disclosure.

It should be further understood that division into the manners, cases, categories, and embodiments in embodiments of the present disclosure is merely intended for ease of description, and shall not constitute a particular limitation. The features in the manners, categories, cases, and embodiments may be combined with each other if logical.

It should be further understood that, the foregoing content is merely intended to help a person skilled in the art better understand embodiments of the present disclosure, but is not intended to limit the scope of embodiments of the present disclosure. A person skilled in the art may make various modifications, variations, combinations, or the like based on the foregoing content. A modified, changed, or combined solution also falls within the scope of embodiments of the present disclosure.

It should be further understood that, descriptions of the foregoing content focus on differences between embodiments. For same or similar parts, refer to each other. For brevity, details are not described herein again.

FIG. 14 is a schematic block diagram of an example device 1400 that can be configured to implement embodiments of the present disclosure. The device 1400 may be implemented to include the data processing apparatus 100 shown in FIG. 1.

As shown in the figure, the device 1400 includes a central processing unit (Central Processing Unit, CPU) 1401, a read-only memory (Read-Only Memory, ROM) 1402, and a random access memory (Random Access Memory, RAM) 1403. The CPU 1401 may perform various appropriate actions and processing according to computer program instructions stored in the RAM 1402 and/or the RAM 1403 or computer program instructions loaded from a storage unit 1408 to the ROM 1402 and/or the RAM 1403. The ROM 1402 and/or the RAM 1403 may further store various programs and data required for operations of the device 1400. The CPU 1401 and the ROM 1402 and/or the RAM 1403 are connected to each other through a bus 1404. An input/output (I/O) interface 1405 is also connected to the bus 1404.

A plurality of components in the device 1400 are connected to the I/O interface 1405, and include: an input unit 1406, for example, a keyboard or a mouse; an output unit 1407, for example, any type of display or speaker; the storage unit 1408, for example, a magnetic disk or an optical disc; and a communication unit 1409, for example, a network interface card, a modem, or a wireless communication transceiver. The communication unit 1409 allows the device 1400 to exchange information/data with another device through a computer network, for example, an internet, and/or various telecommunication networks.

The CPU 1401 may be various general-purpose and/or dedicated processing components with processing and computing capabilities. The CPU 1401 may be implemented as some examples, including but not limited to a graphics processing unit (Graphics Processing Unit, GPU), various dedicated artificial intelligence (Artificial Intelligence, AI) computing chips, various computing units that run a machine learning model algorithm, a digital signal processor (Digital Signal Processor, DSP), and any appropriate processor, controller, or microcontroller, or the like, and may be correspondingly referred to as a computing unit. In some examples, the CPU 1401 may be implemented as the foregoing data processing apparatus 100.

For example, the device 1400 in FIG. 14 may be implemented as an electronic device, for example, a mobile phone, a desktop computer, a laptop computer, a notebook computer, a tablet computer, a personal communication system device, a personal navigation device, a personal digital assistant (Personal Digital Assistant, PDA), an e-book device, a game device, an internet of things (Internet of Things, IoT) device, a vehicle-mounted device, an aircraft, a virtual reality (Virtual Reality, VR) device, an augmented reality (Augmented Reality, AR) device, a wearable device, a television, a cloud server, or a data center. This is not limited in embodiments of the present disclosure.

An embodiment of the present disclosure further provides a chip. The scheduler 110, the storage unit 120, the first processing unit 130, and the second processing unit 140 shown in FIG. 1 may be integrated into the chip.

An embodiment of the present disclosure further provides a system-on-a-chip. The chip may include an input interface, an output interface, and a processing circuit. In this embodiment of the present disclosure, the input interface and the output interface may implement signaling or data exchange, and the processing circuit may implement generation and processing of signaling or data information.

An embodiment of the present disclosure further provides a processor, configured to be coupled to a memory. The memory stores instructions. When the processor runs the instructions, the processor is enabled to perform the method and the functions in any one of the foregoing embodiments.

An embodiment of the present disclosure further provides a computer program product including instructions. When the instructions are run on a computer, the computer is enabled to perform the method and the functions in any one of the foregoing embodiments.

An embodiment of the present disclosure further provides a computer-readable storage medium. The computer-readable storage medium stores computer instructions. When a processor runs the instructions, the processor is enabled to perform the method and the functions in any one of the foregoing embodiments.

Generally, various embodiments of the present disclosure may be implemented by hardware or a dedicated circuit, software, logic, or any combination thereof. Some aspects may be implemented by hardware, and other aspects may be implemented by firmware or software that may be executed by a controller, a microprocessor, or another computing device. Although various aspects of embodiments of the present disclosure are shown and described as block diagrams, flowcharts, or some other figures, it should be understood that the blocks, apparatuses, systems, techniques, or methods described in this specification may be implemented as, non-limiting examples, hardware, software, firmware, dedicated circuits or logic, general-purpose hardware, controllers, other computing devices, or a combination thereof.

The present disclosure further provides at least one computer program product tangibly stored in a non-transitory computer-readable storage medium. The computer program product includes computer-executable instructions, for example, instructions included in a program module, and the instructions are executed on a target device in a real or virtual processor to perform the process/method in the accompanying drawings. Generally, the program module includes a routine, a program, a library, an object, a class, a component, a data structure, and the like for executing a specific task or implementing a specific abstract data type. In various embodiments, functions of program modules may be combined or split between the program modules as required. Machine-executable instructions for the program module may be executed locally or in a distributed device. In the distributed device, program modules may be located in both local and remote storage media.

Computer program code for implementing the method disclosed in the present disclosure may be written in one or more programming languages. The computer program code may be provided to a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In the context of the present disclosure, the computer program code or related data may be carried in any appropriate carrier, so that a device, an apparatus, or a processor can perform various processing and operations described above. Examples of the carrier include a signal, a computer-readable medium, and the like. Examples of the signal may include propagating signals in electrical, optical, radio, sound, or other forms, such as carrier waves and infrared signals.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the method in the present disclosure are described in a particular order in the accompanying drawings, this does not require or imply that these operations need to be performed in the particular order, or that all the shown operations need to be performed to achieve a desired result. Instead, the steps depicted in the flowcharts may change an order of execution. Additionally or alternatively, some steps may be omitted, a plurality of steps are combined into one step for execution, and/or one step is decomposed into a plurality of steps for execution. It should further be noted that, features and functions of two or more apparatuses according to the present disclosure may be specific in one apparatus. Instead, the features and functions of one apparatus described above may be further specific in a plurality of apparatuses.

The foregoing has described various implementations of the present disclosure. The foregoing descriptions are examples, are not exhaustive, and are not limited to the disclosed implementations. Many modifications and changes are apparent to a person of ordinary skill in the art without departing from the scope and spirit of the described implementations. Selection of the terms used in this specification is intended to well explain principles of various implementations, actual applications, or improvements to technologies in the market, or to enable another person of ordinary skill in the art to understand various implementations disclosed in this specification.

## Claims

1. A data processing apparatus, comprising:
a scheduler, configured to schedule at least one processing task to at least one of a first processing unit and a second processing unit;
the first processing unit, configured to process at least a first part of the at least one processing task by using a first convolution parameter, wherein the first convolution parameter is configured in the first processing unit before the at least the first part is processed;
the second processing unit, configured to process at least a second part of the at least one processing task by using a second convolution parameter, wherein the second convolution parameter is read from a storage unit during a process of processing the at least the second part; and
the storage unit, configured to store data related to the at least one processing task, wherein the data comprises the second convolution parameter.

2. The apparatus according to claim 1, wherein the at least one processing task comprises a first processing task, and the scheduler is configured to:
split the first processing task into the first part and the second part, wherein the first part is a first subtask, and the second part is a second subtask;
schedule the first subtask to the first processing unit; and
schedule the second subtask to the second processing unit.

3. The apparatus according to claim 2, wherein the scheduler is configured to split the first processing task into the first part and the second part based on at least one of the following factors:
a size of a convolution kernel used by the first processing unit;
a quantity of channels of data processed by the first processing unit;
a format of data processed by the first processing unit;
a type of an activation function processed by the first processing unit; or
a type of a pooling function processed by the first processing unit.

4. The apparatus according to claim 1, wherein the at least one processing task comprises a first processing task and a second processing task, the first processing task is the first part, and the second processing task is the second part; and
the scheduler is configured to:
schedule the first processing task to the first processing unit; and
schedule the second processing task to the second processing unit.

5. The apparatus according to any one of claims 1 to 4, further comprising a data path, configured to perform data transmission between the first processing unit and the second processing unit.

6. The apparatus according to any one of claims 1 to 5, wherein the first processing unit comprises at least one computing in memory CIM subunit.

7. The apparatus according to any one of claims 1 to 6, wherein the second processing unit comprises at least one of a matrix unit and a vector unit, the matrix unit is configured to perform a matrix computation, and the vector unit is configured to perform a vector computation.

8. The apparatus according to any one of claims 1 to 7, wherein the first convolution parameter is for a first neural network model applicable to the first processing unit, and the second convolution parameter is for a second neural network model applicable to the second processing unit.

9. The apparatus according to claim 8, wherein the first convolution parameter remains unchanged in the first processing unit during a process in which the first neural network model is applied to the first processing unit.

10. The apparatus according to claim 8 or 9, wherein during a process in which the second neural network model is applied to the second processing unit, the second convolution parameter is read from the storage unit to the second processing unit, to update a historical convolution parameter in the second processing unit.

11. The apparatus according to any one of claims 1 to 10, wherein the apparatus is a chip, the scheduler, the first processing unit, the second processing unit, and the storage unit are integrated into the chip, and the storage unit comprises a buffer Buffer or a cache Cache.

12. A data processing method, comprising:
scheduling, by a scheduler, at least one processing task to at least one of a first processing unit and a second processing unit;
processing, by the first processing unit, at least a first part of the at least one processing task by using a first convolution parameter, wherein the first convolution parameter is configured in the first processing unit before the at least the first part is processed; and
processing, by the second processing unit, at least a second part of the at least one processing task by using a second convolution parameter, wherein the second convolution parameter is read from a storage unit during a process of processing the at least the second part, the storage unit is configured to store data related to the at least one processing task, and the data comprises the second convolution parameter.
